# EUROPÄISCHE PATENTSCHRIFT

(11) **EP 0 366 147 B1**
(45) Veröffentlichungstag und Bekanntmachung des Hinweises auf die Patenterteilung: **28.07.1993**
(21) Anmeldenummer: 89120025.5
(22) Anmeldetag: 27.10.1989
(51) Int. Cl.: B60R 1/06

(54) **Abklappbarer Aussenspiegel für Fahrzeuge**
Pivoting exterior mirror for vehicles
Rétroviseur extérieur escamotable pour véhicule automobile

(30) Priorität: 27.10.1988 DE 8813505 U
(43) Veröffentlichungstag der Anmeldung: 02.05.1990
(73) Patentinhaber: HOHE KG, D-97903 Collenberg (DE)
(72) Erfinder: Schwartz, Christoph Dipl.-Ing., D-6982 Freudenberg (DE)
(74) Vertreter: Zinngrebe, Horst, Dr.rer.nat.

(56) Entgegenhaltungen:
- DE-A- 3 220 893
- DE-U- 8 711 959
- DE-U- 8 804 802

## Beschreibung

Die Erfindung betrifft einen Außenspiegel für ein Fahrzeug mit einem an der Karosserie des Fahrzeugs befestigbaren Spiegelfuß mit einem am Spiegelfuß mit Federkraft in Gebrauchslage gehaltenen Spiegelgehäuse, wobei ein spiegelfußnaher Rand des Spiegelgehäuses auf einer Schulter des Spiegelfusses ruht und das Spiegelgehäuse um seinen in Fahrtrichtung hinteren Randabschnitt gegen die Federkraft relativ zum Spiegelfuß nach hinten schwenkbar ist und wobei ein Sperrorgan am Spiegelgehäuse oder Spiegelfuß befestigt ist und in einer Schwenkendlage in einer am Spiegelfuß oder Spiegelgehäuse ausgebildeten Falle durch eine über die Schwenkendlage hinausgehende Bewegung des Spiegelgehäuses lösbar eingefangen ist.

Aus der DE-A-3 220 893 ist ein Außenspiegel bekannt, bei dem das relativ zur Fahrtrichtung nach rückwärts abgeschwenkte Spiegelgehäuse in einer Schwenkendlage relativ zum Spiegelfuß gehalten ist. Dazu ist am Spiegelfuß ein nach vorne federbelasteter Schwenkarm angelenkt, dessen ausgekehltes freies Ende in der Schwenkendlage den vorderen Spiegelgehäuserand unterfaßt. Beim Durchfahren durch enge Passagen kann das über die Fahrzeugkarosserie seitlich vorstehende Spiegelgehäuse vom Fahrer in die Schwenkendlage abgeklappt werden, so daß sich die für die Durchfahrt des Fahrzeugs erforderliche Durchlaßbreite der Engstelle entsprechend reduziert.

Wenn bei Weiterfahrt das Spiegelgehäuse wieder in die Gebrauchslage zurückgeklappt werden soll, muß der Fahrer den Schwenkarm aus der Arretierstellung nach rückwärts drücken. Dabei kann sich ein Sicherheitsrisiko für den Fahrer insofern ergeben, als seine Finger beim Zurückklappen des Spiegelgehäuses in die Gebrauchslage unter der Wirkung einer üblicherweise stark ausgelegten Zugfeder zwischen vorderem Spiegelgehäuserand und Spiegelfuß eingeklemmt werden können.

In der deutschen Gebrauchsmusterschrift DE-U-8 711 959.5 ist zur Minderung dieses Sicherheitsrisikos eine lösbare Rastvorrichtung zwischen Spiegelgehäuse und Spiegelfuß vorgesehen, welche einerseits das Spiegelgehäuse in der Schwenkendlage definiert hält und andererseits durch leichten, in die Gebrauchslage gerichteten Stoß auf den äußeren Spiegelgehäuserand gelöst werden kann, so daß der Fahrer nicht mehr genötigt ist, mit seinen Händen in die Öffnung zwischen abgeklapptem Spiegelgehäuse und Spiegelfuß eingreifen zu müssen.

Bei diesem Rastmechanismus kann das Spiegelgehäuse nur durch eine Krafteinwirkung in Richtung auf seine Gebrauchslage aus der Schenkendlage befreit werden. Dazu muß in den Zwischenraum zwischen Fahrzeugkarosserie und abgeklapptem Spiegelgehäuse eingegriffen werden.

Aus der gattungsbildenden Gebrauchsmusterschrift DE-U-8 804 802.0 ist ein eine federbelastete Wippe aufweisender Rastmechanismus bekannt, bei dem das abgeklappte Spiegelgehäuse durch Krafteinwirkung in Richtung der Abklappbewegung aus seiner Schwenkendlage befreit werden kann. Bei diese Art bequemer auszuführenden Krafteinwirkung löst sich die Rastverbindung zwischen Sperrorgan und Falle und verändert die relative Lage von Sperrorgang zur Falle so, daß das Spiegelgehäuse unter der Wirkung der Zugfedern, die üblicherweise an ihm und am Spiegelfuß eingehängt sind, wieder in seine Gebrauchslage zurückkehren kann.

Der vorliegenden Erfindung liegt die Aufgabe zugrunde, den aus der letztgenannten Gebrauchsmusterschrift bekannten Rastmechanismus konstruktiv wesentlich zu vereinfachen.

Dazu ist bei dem eingangs genannten Außenspiegel vorgesehen, daß das Sperrorgang eine langgestreckte, quer zu ihrer Längsrichtung mit einem der Falle angepaßten Profil versehene Rastfeder ist und eine die Rastfeder auslenkende Kulisse vorgesehen ist, wobei der durch die Schwenkbewegung des Spiegelgehäuses definierte Weg der Rastfeder die Kulisse oder der durch die Schwenkbewegung des Spiegelgehäuses definierte Weg der Kulisse die Rastfeder kreuzt derart, daß bei in der Falle eingefangenem Profil die Rastfeder im Sinne ihrer Befreiung gespannt ist. Die Erfindung nutzt die relative Steifheit der Rastfeder in ihrer Längsrichtung und ihre weiche Elastizität quer zu ihrer Oberfläche zu Schaffung eines lösbaren Rastmechanismus aus, der mit weniger Bauteilen als bisher und ohne Gelenke auskommt und daher preiswerter bei gleicher Funktionstüchtigkeit und leichter einbaubar ist.

In bevorzugter Ausgestaltung der Erfindung ist die Rastfeder in einer spiegelfußnahen Wand des Spiegelgehäuses verankert und erstreckt sich in Gebrauchslage in Richtung des Spiegelfusses, wobei dann die Falle an wenigstens einem aus dem Spiegelfuß in Gebrauchslage in das Spiegelgehäuse vorstehenden Rastohr ausgebildet ist.

In besonders einfacher Weise kann das Profil aus einer wenigstens einseitigen Verbreiterung der Rastfeder bestehen und die Falle an der Kulisse ausgebildet sein, welche in den Schwenkweg der Verbreiterung ragt. Bei dieser Ausführungsform der Erfindung ist es möglich, die Falle in Form einer ein Zurückschwenken der Rastfeder blockierenden Rastschulter für die Verbreiterung auszuführen. Um ein Schwenken des Spiegelgehäuses über die durch Eingriff des Profils in die Falle definierten Schwenkendlage hinaus zu erschweren, kann hierbei vorgesehen sein, daß die Kulisse an ihrem vom Spiegelfuß entfernten Ende eine aus ihrer Unterseite vorstehende Nocke aufweist. Damit die Rastfeder schließlich nach ihrer Befreiung aus der Falle einen ungehinderten Rückweg in die Gebrauchslage des Spiegelgehäuses findet, erweist es sich als zweckmäßig, dann die Oberseite der Kulisse glatt zu halten. Schließlich wird der Eingriff des Profils in die Falle bei diesem Ausführungsbeispiel der Erfindung dadurch verbessert, daß die Rastfeder an ihrem freien Ende abgebogen ist.

Um eine symmetrische Belastung der Rastfeder in der Schwenkendlage zu gewinnen, empfiehlt es sich ferner, die Rastfeder an ihrem freien Ende mit zwei gegenüberliegenden Verbreiterungen zu versehen, wobei dann zwei spiegelsymmetrische Rastohren vorgesehen sind, deren Kulissen zwischen sich einen Zwischenraum lassen, der breiter ist als ein Hauptteil der Rastfeder, jedoch enger ist als die Breite der Rastfeder an ihren Verbreiterungen.

In einer anderen Ausführungsform der Erfindung ist in die Rastfeder eine Quersicke eingeprägt, wobei das Rastohr einen Rastsitz aufweist, der eine der Sicke angepaßte Form aufweist. Es empfiehlt sich dann, an dem Rastohr eine dem Rastsitz zugeordnete Kulisse vorzusehen, welche im Schwenkweg einer seitlichen Verbreiterung am freien Ende der Rastfeder angeordnet ist. Schließlich kann diese Ausführungsform der Erfindung sich auch durch eine Weiterbildung auszeichnen, gemäß welcher das Rastohr zwei mit dem Spiegelfuß verbundene, beabstandete Schenkel aufweist, die durch einen Rastsitz verbunden sind, und jeweils eine Kulisse tragen, welche im Schwenkweg zweier einandergegenüber liegender, am Ende der Rastfeder ausgebildeten Verbreiterungen angeordnet sind und zwischen sich einen Zwischenraum lassen, der größer ist als die Breite eines Hauptteils der Rastfeder und enger ist als die Breite der Rastfeder an ihren endseitigen Verbreiterungen.

Nachstehend wird die Erfindung anhand der in der beigefügten Zeichnung dargestellten Ausführungsbeispiele im einzelnen beschrieben. Es zeigen:

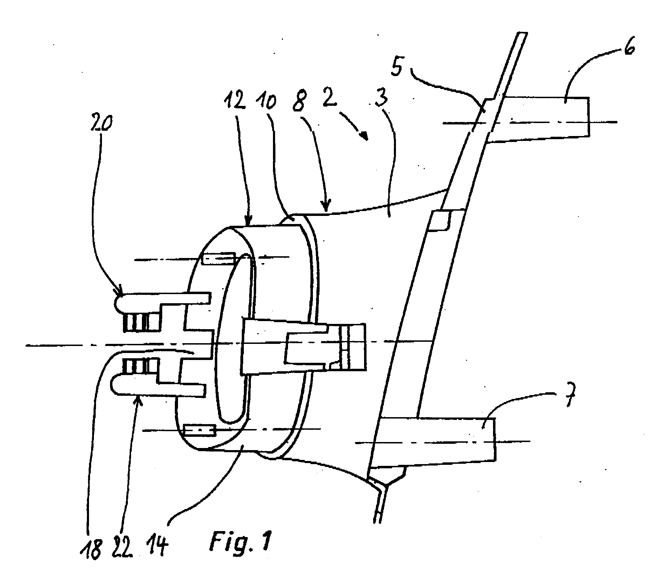

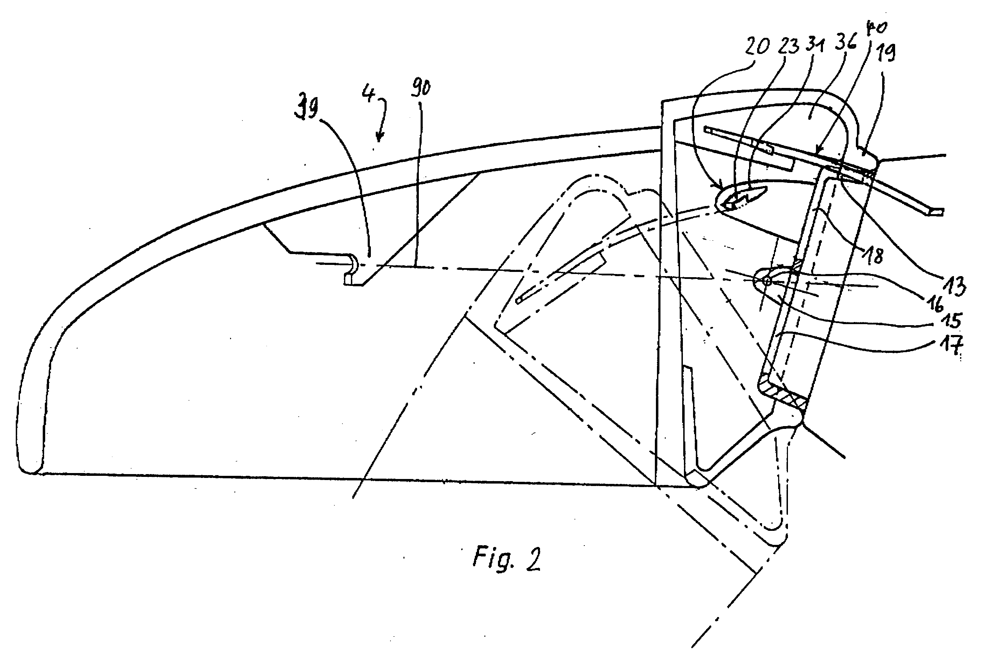

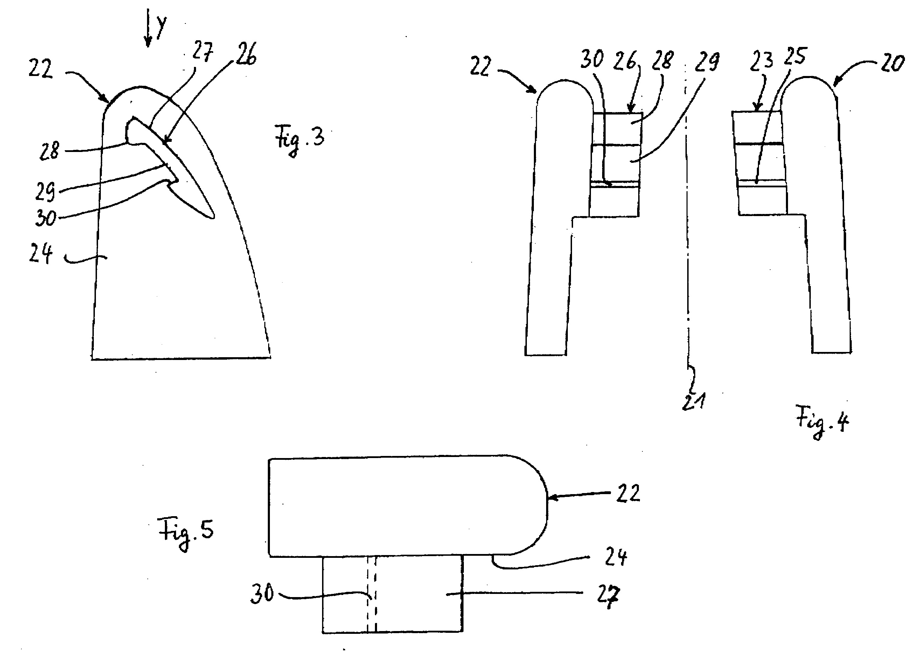

- Fig. 1: eine perspektivische Ansicht der wesentlichen Teile eines Spiegelfusses für einen Kfz-Außenspiegel;
- Fig. 2: eine schematische Darstellung des Spiegelgehäuses zum Außenspiegel nach Fig. 1, wobei die Gebrauchslage desselben in ausgezogenen Linien und die Schwenkendlage desselben strichpunktiert angedeutet sind;
- Fig. 3: eine Seitenansicht eines Rastohres;
- Fig. 4: eine Vorderansicht eines Rastohrpaares;
- Fig. 5: eine Daraufsicht auf das Rastohr nach Fig. 3 aus Richtung y;
- Fig. 6: eine schematische Darstellung der wesentlichen Teile des Spiegelgehäuses nach Fig. 2 in nach vorne geschwenkter Stellung;
- Fig. 7: eine Seitenansicht der Rastfeder;
- Fig. 8: eine Daraufsicht auf die Rastfeder nach Fig. 7;

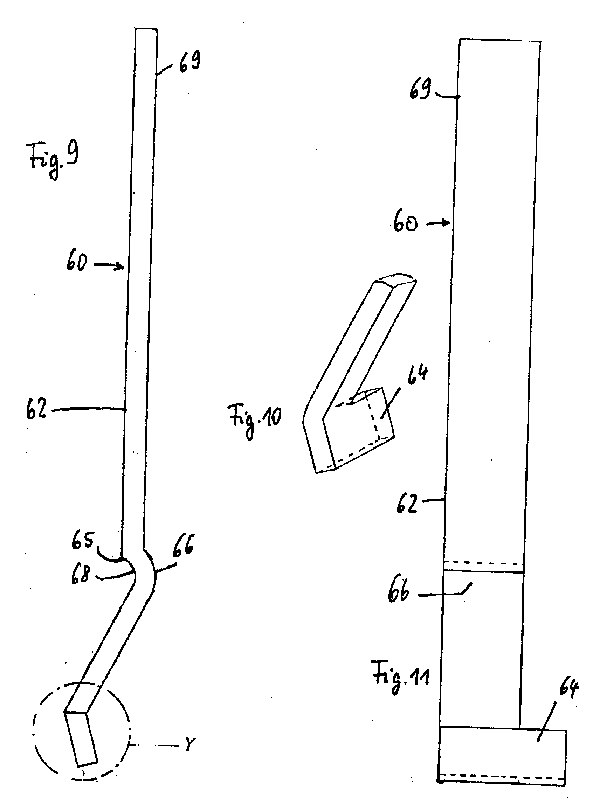

- Fig. 9: eine Seitenansicht einer Rastfeder für eine weitere Ausführungsform;

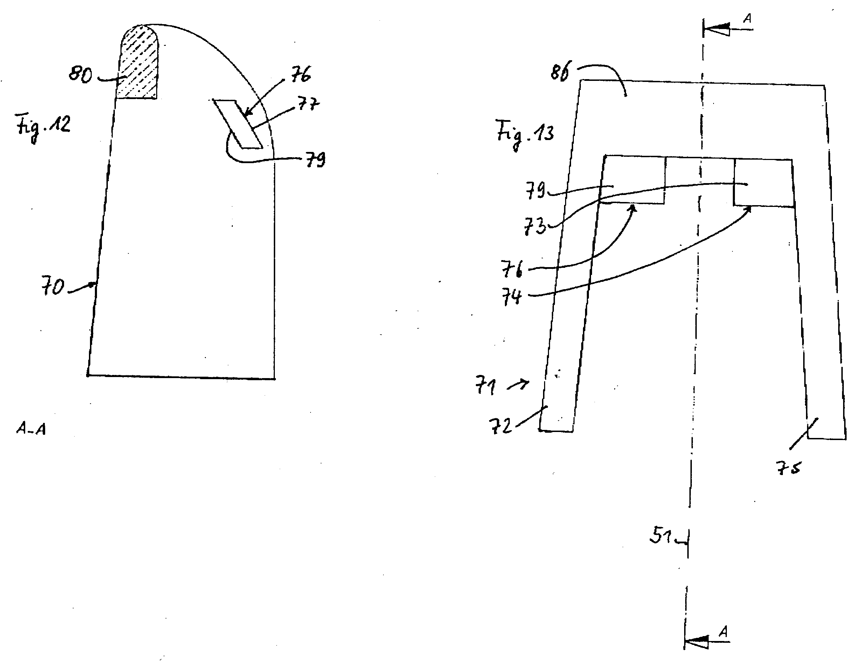

- Fig. 10: eine perspektivische Darstellung eines Details der Rastfeder aus Fig. 9;
- Fig. 11: eine Daraufsicht auf die Rastfeder nach Fig. 9;

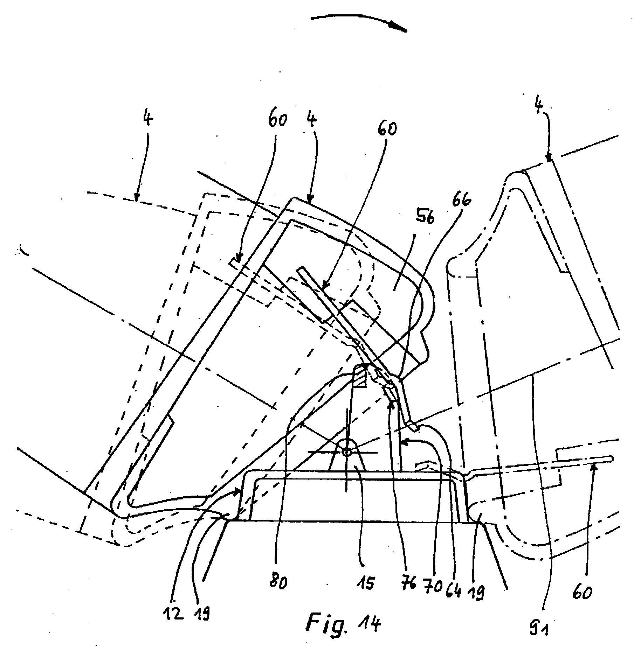

- Fig. 12: eine der Fig. 3 ähnliche Seitenansicht eines Rastohres für die Rastfeder nach Fig. 9;
- Fig. 13: eine der Fig. 4 ähnliche Ansicht des Rastohres der Fig. 12;
- Fig. 14: eine den Fig. 2 und 6 ähnliche Darstellung, bei der das aus der gestrichelt dargestellten Freigabestellung in die Gebrauchslage zurückschwenkende Spiegelgehäuses in ausgezogenen Linien und das nach vorne geschwenkte Spiegelgehäuse in strichpunktierten Linien dargestellt sind.
- Fig. 15: eine schematische Darstellung des relativ zur Fahrtrichtung nach rückwärts abgeschwenkten Spiegelgehäuses, wobei dessen Schwenkendlage in ausgezogenen Linien, dessen Freigabelage in gestrichelten Linien und dessen Gebrauchslage in strichpunktierten Linien dargestellt sind.

Der Außenspiegel besteht wie üblich aus einem an einer nicht dargestellten Karosserie eines Fahrzeuges, beispielsweise der linken Fahrertür eines PKW, befestigbaren Spiegelfuß 2 und einem an diesem mittels einer oder mehrerer Zugfedern befestigten Spiegelgehäuse 4. Dazu weist der Spiegelfuß 2 mehrere von einer Montageplatte 5 nach innen abstehende Befestigungszapfen 6, 7 auf, mit denen der Spiegelfuß am Fahrzeug befestigt werden kann. Aus der den Befestigungszapfen gegenüberliegenden Außenseite der Montageplatte 5 erhebt sich ein mit einer glatten Randkontur 3 versehenes, rundes Fußteil 8, welches über eine umlaufende, radial einwärts weisende Schulter 10 in einen erhabenen Sockel 12 übergeht. Der Sockel 12 besitzt einen umlaufenden, die Schulter 10 nach innen begrenzenden Rand 14, welcher in einem bezüglich der Fahrtrichtung des Fahrzeuges vorderen Abschnitt eine Ausnehmung 13 aufweist. Der Sockel ist zum Spiegelgehäuse hin durch eine Platte 17 abgeschlossen, in welche der umlaufende Rand 14 übergeht und welche einen mit der Ausnehmung 13 kommunizierenden Durchbruch 18 besitzt.

Beiderseits der Ausnehmung 13 und dem Durchbruch 18 erheben sich zwei Rastohre 20, 22, welche zwischen sich einen etwa der Breite des Durchbruch 18 entsprechenden Zwischenraum freilassen. Die Rastohren 20, 22 werden nachstehend noch im einzelnen beschrieben.

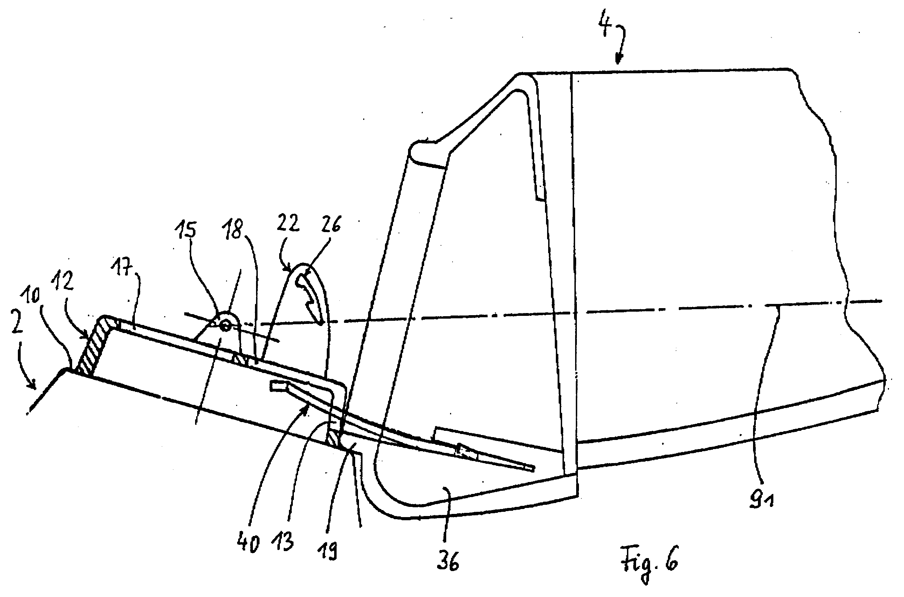

Aus der Platte 17 erhebt sich ferner ein Bock 15 mit Durchgangsbohrung 16, in welche ein Ende einer nicht dargestellten Zugfeder entweder direkt oder über ein Zwischenglied eingehängt ist, wobei das andere Ende der Zugfeder im Spiegelgehäuse, beispielsweise in der spiegelgehäusefesten Nase 39 eingehängt ist. Dargestellt ist zur Verdeutlichung lediglich die Wirklinie 90 der Zugfeder in Gebrauchslage des Spiegelgehäuses. Die Gebrauchslage ist dadurch definiert, daß ein umlaufender, am freien Ende ballig geformter Gehäuserand 19 auf der Schulter 10, den Sockel 12 umfassend allseits aufliegt, wie Fig. 2 zeigt. In dieser Gebrauchslage wird das Spiegelgehäuse 4 wie bekannt durch die Zugfeder gehalten. Ein im Spiegelgehäuse 4 befestigter, nicht dargestellter Rückspiegel kann dann dem Fahrer einen Blick nach rückwärts vermitteln.

Gemäß Fig. 4 sind die Rastohre 20, 22 bezüglich einer Mittelebene 21 durch ihren Zwischenraum symmetrisch ausgeführt, so daß die Beschreibung des Rastohres 22 entsprechend für das Rastohr 20 gilt. Das Rastohr 22 besteht aus einer im wesentlichen ebenen, kräftigen spitzhutförmigen Platte 24, an deren oberen Teil eine gebogene, von der Oberfläche der Platte 24 rechtwinklig abstehende Führungsleiste 26 als Kulisse angeformt ist. An ihrer vom Spiegelfuß wegweisenden Oberseite 27 ist das Führungsteil 26 glatt und bezüglich der Platte 17 leicht konvex gekrümmt. Die der Oberseite 27 gegenüberliegende Unterseite 29 des Führungsteils 26 ist in ihrem unteren Abschnitt mit einer auswärts vorspringenden Rastschulter 30 als Falle versehen, so daß das Führungsteil 26 im unteren Abschnitt verdickt ist und von da aus nach unten spitz zuläuft. Im oberen Teil der Unterseite 29 ist eine aus dieser ebenfalls vorstehende Gleitnocke 28 als eine Verdickung des Führungsteils 26 ausgebildet.

Entsprechend weist das Rastohr 20 ein Führungsteil 23 als Kulisse mit Rastschulter 25 als Falle auf der Unterseite und eine der Oberseite 27 entsprechende Oberseite 31 (Fig. 2) auf.

Im dargestellten Ausführungsbeispiel sind die Rastohre 20, 22 so ausgerichtet, daß deren Führungsteile 23, 26 im wesentlichen quer zu einer Ebene sich aufeinander zu erstecken, in welcher das Spiegelgehäuse 4 gegen die von der Zugfeder entwickelte Kraft vom Spiegelfuß 2 relativ zur Fahrtrichtung nach rückwärts abgeschwenkt werden kann.

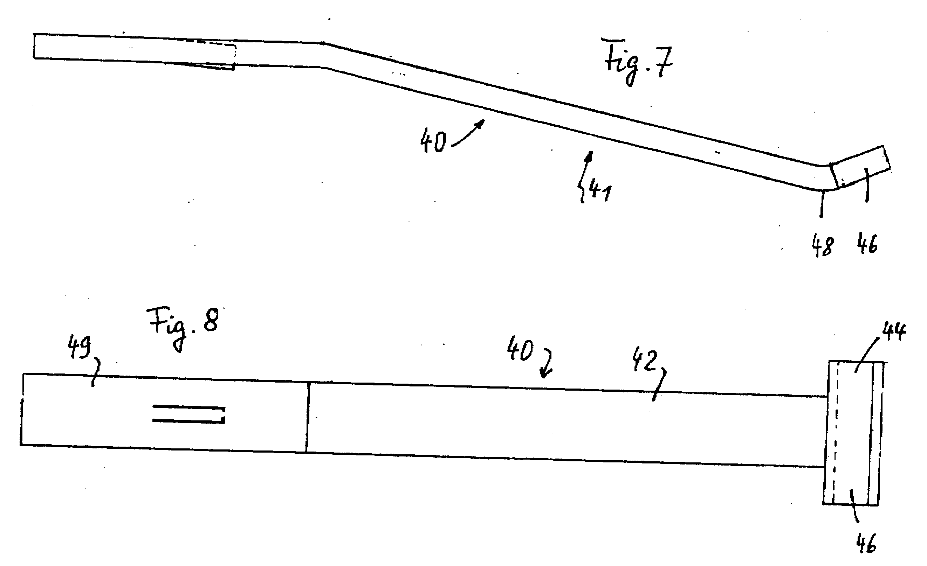

Das Spiegelgehäuse 4 besitzt in einem Abschnitt, welcher dem Gehäuserand 19 sowie dem Durchbruch 18 der Platte 17 benachbart ist, eine nach innen vorstehende Wand 36, in welcher eine Rastfeder 40 in Form eines profilierten schmalen Blechstreifens zug- und drucksicher so verankert ist, daß der frei bewegliche Hauptteil 42 der Rastfeder 40 den Gehäuserand 19 innen passierend aus dem Spiegelgehäuse 4 in den Spiegelfuß 2 sich erstrecken kann. Die Rastfeder 40 hat die Eigenschaft, daß sie quer zu ihrer in Fig. 7 übertrieben dargestellten Stärke, also etwa in Richtung des Pfeiles 41 weich elastisch, jedoch in ihrer Längsrichtung praktisch nicht elastisch ist. An ihrem zur Einbettung in die Wand 36 vorgesehenen hinteren Abschnitt 49 der Rastfeder 40 ist mit einer kleinen abstehenden Nase versehen. Der vordere Hauptteil 42 ist am vorderen Ende zu beiden gegenüberliegenden Seiten rechtwinklig erweitert und leicht quer zu seiner Längserstreckung in eine Richtung abgebogen, die bei eingebauter Blattfeder 40 und in Gebrauchslage befindlich am Spiegelgehäuse leicht nach vorne weist. Die beiden gegenüberliegenden Verbreiterungen der Rastfeder 40 seien für die nachfolgende Beschreibung mit 44 und 46 und der Rücken der Abbiegung mit 48 bezeichnet.

Die in der beschriebenen Weise eingebaute Rastfeder 40 stellt mit den Führungsteilen 23 und 26 einen das Spiegelgehäuse 4 in einer hinteren Schwenkendlage haltenden Rastmechanismus dar, der durch Krafteinwirkung auf das Spiegelgehäuse 4 in Richtung des Abschwenkens nach hinten lösbar ist und wie folgt arbeitet:

In Gebrauchslage (Fig. 2) erstreckt sich der Hauptteil 42 der Rastfeder durch die Ausnehmung 13 in das hohle Innere des Spiegelfusses 2. Beim Abschwenken des Spiegelgehäuses nach rückwärts hebt der vordere Gehäuserand 19 von der zugehörigen Partie der Ringschulter 10 ab, während der hintere Abschnitt des Gehäuserandes 19 auf der hinteren Partie der Ringschulter 10 gegen die Wirkung der Zugfeder abrollt. Die Haken 44 und 46 beschreiben bei dieser Bewegung des Spiegelgehäuses 4 eine der entspannten Rastfeder 40 entsprechende Bahn, welche in der Nähe der hinteren Schwenkendlage den unteren Teil der Führungsteile 23 und 26 kreuzt. Bei fortschreitender Schwenkbewegung drücken diese die Rastfeder quer zu ihrer Längserstreckung solange nach hinten, bis die Haken 44, 46 über die Rastschultern 25 und 30 in Anlage an die Unterseite 29 und die entsprechende Unterseite des Führungsteiles 23 anfedern. Dadurch ist die hintere Schwenkendlage des Spiegelgehäuses 4 definiert, aus welcher es durch die Zugfeder nicht mehr nach vorne schwenken kann, weil die Vorderkanten der Haken 44 und 46 gegen die Rastschultern 25 und 30 anliegen. Erst wenn das Spiegelgehäuse 4 weiter nach hinten geschwenkt wird, gleiten die Haken 44 und 46 von den Rastschultern 25, 30 ausgehend auf der Unterseite der Führungsteile 23 und 26 weiter und rutschen schließlich über die Nocke 28 beziehungsweise die gleichartige Nocke am Führungsteil 23 mit der Folge, daß die Rastfeder 40 sich nach vorne entspannt und die Haken 44, 46 sowie der Rücken 48 eine Stellung oberhalb der Führungsteile 23, 26 einnehmen. Aus dieser Stellung kann das Spiegelgehäuse 4 in die Gebrauchslage durch die Zugfeder zurückgeholt werden, weil die Haken 44 und 46 jetzt über die Oberseiten 31 und 27 der Führungsteile 23 und 26 behinderungslos abgleiten können. Man erkennt, daß es für diese Wirkungsweise erforderlich ist, daß die Führungsteile 23 und 26 den Schwenkweg der entspannten Rastfeder 40 soweit kreuzend angeordnet sind, daß die untere Spitze der Führungsteile 23, 26 oberhalb und das obere Ende der Oberseiten 31, 27 deutlich unterhalb, jeweils bezüglich der Platte 17, dieses Weges liegen. Man erkennt ferner, daß der Zwischenraum zwischen den Führungsteilen 23 und 26 breiter ist als die Breite des Hauptteils 42 und enger it als die Breite der Rastfeder 40 an ihren Verbreiterungen 44, 46.

Beim Abschwenken des Spiegelgehäuses 4 in Fahrtrichtung nach vorne rollt der vordere Abschnitt des Gehäuserandes 19 auf dem zugehörigen Abschnitt der Ringschulter 10 ab, wie Fig. 6 zeigt. Die Rastfeder 40 kommt bei dieser Bewegung mit den Führungsteilen 23, 26 nicht in Berührung, die Haken 44, 46 bleiben in ihrer Bewegung im wesentlichen auf das Innere des Spiegelfusses 2 beschränkt, wie Fig. 6 zeigt. Die Wirkungslinie der Zugfeder bei nach vorne abgeschwenktem Spiegelgehäuse 4 ist in Fig. 6 mit 91 bezeichnet.

Man erkennt aus dem Zusammenhang der vorstehenden Beschreibung, daß sich der Rastmechanismus auch mit der Rastfeder 40 und einem der beiden Rastohren 20 oder 22 erreichen läßt, wobei dann nur einer der beiden Haken 44 oder 46 erforderlich ist.

Gemäß einer anderen Ausführungsform der Erfindung weist eine Rastfeder 60, die aus einem schlanken, schmalen elastischen Blechstreifen ähnlich wie die Rastfeder 40 geschnitten ist, einen zur Befestigung in einer Spiegelgehäusewand 56 vorgesehenen Abschnitt 69 und einen quer zu ihrer Stärke weich elastischen Hauptteil 62 auf. Das freie untere Ende der Rastfeder 60 ist wieder nach vorne abgeknickt und zur Bildung eines Hakens 64 dort zeitlich rechtwinklig verbreitert. In einem mittleren Bereich des Hauptteils 62 ist in die Rastfeder 60 eine zur Abknickung des Hakens 64 weisende Quersicke 66 als Profil geprägt, deren konkave Innenseite mit 68 bezeichnet ist. Von der Sicke 66 erstreckt sich die Rastfeder 60 geradlinig zum Haken 64. Ein Rastohr 70 ist ähnlich geformt wie eines der Rastohre 20 und 22, besitzt jedoch statt der vorstehend beschriebenen Führungsteile ein im Querschnitt parallelogrammförmiges Führungsteil 76 als Kulisse und einen Rastsitz 80 als Falle seitlich oberhalb des Führungsteils 76. Der Rastsitz 80 hat eine runde Oberseite, deren Form der Sicke 68 angepaßt ist. Der Rastsitz 80 steht ebenso wie das Führungsteil 76 und die Führungsteile 23 und 26 quer von der Fläche des Rastohres 70 ab. Das Rastohr 70 erhebt sich neben der Öffnung 13 beziehungsweise dem Durchbruch 18 im Sockel 12 des Spiegelfusses 2 so, daß der Rastsitz 80 und das Führungsteil 76 in den Schwenkweg der in der Spiegelgehäusewand 56 verankerten und mit dem Hauptteil 62 in Gebrauchslage des Spiegelgehäuses 4 in den Sockel 12 eintauchenden Rastfeder 60 beziehungsweise deren Haken 64 ragt.

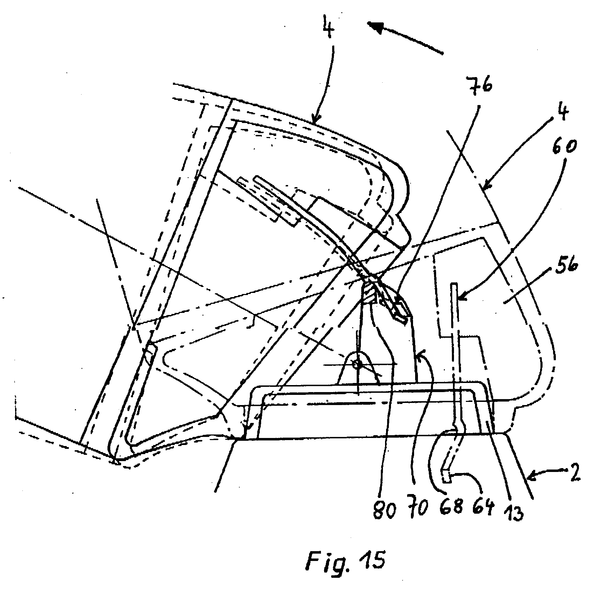

Wie beim ersten Ausführungsbeispiel der Erfindung bildet die Rastfeder 60 im Zusammenwirken mit dem Rastohr 70 einen Rastmechanismus, welcher das Spiegelgehäuse 4 in der hinteren Schwenkendlage festhält und durch weiteres Rückwärtsschwenken des Spiegelgehäuses 4 gelöst werden kann, so daß dann das Spiegelgehäuse 4 unter Wirkung der Zugfeder in die Gebrauchslage zurückkehren kann. Wie Fig. 14 und 15 zeigen, erstreckt sich der Hauptteil 62 der Rastfeder 60 bei Gebrauchslage durch den Durchbruch 18 in den Sockel 12. Bei Abschwenken des Spiegelgehäuses 4 nach hinten übergreift die Unterseite 79 des Führungsteils 76 den freien Endabschnitt des Hauptteils 62 mit Haken 64 und lenkt die Rastfeder 60 nach hinten aus. Wenn die Sicke 68 bei fortschreitender Rückwärtsschwenkbewegung des Spiegelgehäuses 4 schließlich auf die runde Oberseite des Rastsitzes 80 gelangt, kann die scharfe, vom Haken 64 abgewandte Kante 65 der Sicke 68 nicht mehr nach vorne über den Rastsitz 80 gelangen, weil die Unterseite 79 den Haken 64 übergreift und die Sicke 68 auf den Rastsitz 80 drückt. Das Spiegelgehäuse 4 kann dann durch die Zugfeder nicht mehr in die Gebrauchslage zurückkehren, befindet sich also in der hinteren Schwenkendlage. Bei weiterer Rückwärts-Schwenkbewegung des Spiegelgehäuses 4 rutscht die Sicke 68 vom Rastsitz 80 bezüglich der Platte 17 ab, bis der Haken 64 von der Unterseite 79 freikommt. Die Rastfeder 60 entspannt sich und hebt von dem Rastsitz nach vorne ab. Wie insbesondere Fig. 14 zeigt, hat bei dem Vorwärtsschwenken des Spiegelgehäuses 4 unter Wirkung der Zugfeder die entspannte Rastfeder 60 einen derartigen Abstand sowohl vom Rastsitz 80 als auch vom Führungsteil 76, daß sowohl der Haken 64 als auch die Sicke 68 ihren Weg behinderungslos über den Rastsitz 80 und die Oberseite 77 des Führungsteils 76 hinwegfinden können.

Es versteht sich hiernach, daß das Führungsteil 76 den Schwenkweg des Hakens 64 bei entspannter Rastfeder 60 derart kreuzt, daß die untere Kante der Unterseite 79 sich oberhalb und die obere Kante der Unterseite 79 unterhalb, jeweils bezüglich der Platte 17, des Schwenkweges des Hakens befinden.

Beim Abschwenken des Spiegelgehäuses 4 nach vorne lassen der Durchbruch 18 und die Öffnung 13 dem freien Ende der Rastfeder 60 genügend Spielraum zur ungehinderten Bewegung, ohne daß dieses dabei das Führungsteil 76 oder den Rastsitz 80 tangiert.

Obwohl beim zweiten Ausführungsteil der Erfindung die Rastfeder 60 nur mit einem Rastohr 70 zusammenwirkt, kann diesem auch die in Fig. 13 dargestellte Form gegeben werden. Danach ist das Rastohr 70 durch ein bezüglich der Mittelebene 51 symmetrisches Teil ergänzt, welches demzufolge ein separates Führungsteil 74 mit zur Unterseite 79 paralleler Unterseite 73 und einen über den Zwischenraum der beiden Führungsteile 76, 74 hindurchgehenden Rastsitz 86 aufweist. Das so gebildete Rastohr 71 steht mit den beiden gegenüberliegenden Schenkeln 72 und 75 auf der Platte 17 des Sockels 12. Für diese Abwandlung der Erfindung muß die Rastfeder 60 um einen dem Haken 64 bezüglich der nicht dargestellten Mittellinie der Rastfeder 60 gegenüberliegenden Haken ergänzt werden, welcher dann die Unterseite 73 beim Abschwenken des Spiegelgehäuses nach hinten untergreifen kann.

## Patentansprüche

1. Außenspiegel für ein Fahrzeug mit einem an der Karosserie des Fahrzeugs befestigbaren Spiegelfuß (2) mit einem am Spiegelfuß (2) mit Federkraft in Gebrauchslage gehaltenen Spiegelgehäuse (4), wobei ein spiegelfußnaher Rand (19) des Spiegelgehäuses (4) auf einer Schulter (10) des Spiegelfusses (2) ruht und das Spiegelgehäuse ( 4) um seinen in Fahrtrichtung hinteren Randabschnitt gegen die Federkraft relativ zum Spiegelfuß (2) nach hinten schwenkbar ist und wobei ein Sperrorgan am Spiegelgehäuse (4) oder Spiegelfuß (2) befestigt ist und in einer Schwenkendlage in einer am Spiegelfuß (2) oder Spiegelgehäuse (4) ausgebildeten Falle durch eine über die Schwenkendlage hinausgehende Bewegung des Spiegelgehäuses (4) lösbar eingefangen ist, dadurch gekennzeichnet, daß das Sperrorgan eine langgestreckte, quer zu ihrer Längsrichtung mit einem der Falle (29, 30, 25, 80, 86) angepaßten Profil (44, 46, 68) versehene Rastfeder (40, 60) ist und eine die Rastfeder auslenkende Kulisse (23, 26, 74, 76) vorgesehen ist, wobei der durch die Schwenkbewegung des Spiegelgehäuses (4) definierte Weg der Rastfeder die Kulisse oder der durch die Schwenkbewegung des Spiegelgehäuses definierte Weg der Kulisse die Rastfeder kreuzt derart, daß bei in der Falle eingefangenem Profil die Rastfeder (40, 60) im Sinne ihrer Befreiung gespannt ist.

2. Außenspiegel nach Anspruch 1, dadurch gekennzeichnet, daß die Rastfeder (40, 60) in einer spiegelfußnahen Wand (36, 56) des Spiegelgehäuses (4) verankert ist und sich in Gebrauchslage in Richtung des Spiegelfusses (2) erstreckt; und daß die Falle an wenigstens einem aus dem Spiegelfuß (2) in Gebrauchslage in das Spiegelgehäuse (4) vorstehenden Rastohr (20, 22, 70, 71) ausgebildet ist.

3. Außenspiegel nach Anspruch 2, dadurch gekennzeichnet, daß die Kulisse (23, 26, 74, 76) an dem Rastohr (20, 22, 70, 71) ausgebildelt ist.

4. Außenspiegel nach einem der Ansprüche 1 bis 3, dadurch gekennzeichnet, daß das Profil aus einer wenigstens einseitigen Verbreiterung (44, 46) der Rastfeder (40) besteht und die Falle (29, 30) an der Kulisse (23, 26) ausgebildet ist, welche in den Schwenkweg der Verbreiterung (44, 46) ragt.

5. Außenspiegel nach Anspruch 4, dadurch gekennzeichnet, daß die Falle eine ein Zurückschwenken der Rastfeder (40) blockierende Rastschulter (30, 25) für die Verbreiterung ist.

6. Außenspiegel nach einem der Ansprüche 4 oder 5, dadurch gekennzeichnet, daß die Kulisse (23, 26) an ihrem vom Spiegelfuß (2) entfernten Ende eine aus ihrer Unterseite (29) vorstehende Nocke (28) aufweist.

7. Außenspiegel nach einem der Ansprüche 4 bis 6, dadurch gekennzeichnet, daß die Oberseite (27, 31) der Kulisse (23, 26) glatt ist.

8. Außenspiegel nach einem der Ansprüche 4 bis 7, dadurch gekennzeichnet, daß die Rastfeder an ihrem freien Ende (bei 48) abgebogen ist.

9. Außenspiegel nach einem der Ansprüche 4 bis 8, dadurch gekennzeichnet, daß die Rastfeder (40) an ihrem freien Ende zwei gegenüberliegende Verbreiterungen (44, 46) aufweist, und daß zwei spiegelsymetrische Rastohren (20, 22) vorgesehen sind, deren Kulisse (23, 26) zwischen sich einen Zwischenraum lassen, der breiter ist als ein Hauptteil (42) der Rastfeder (40), jedoch enger ist als die Breite der Rastfeder (49) an ihren Verbreiterungen (44, 46).

10. Außenspiegel nach einem der vorstehenden Ansprüche, dadurch gekennzeichnet, daß in die Rastfeder (60) eine Quersicke (68) eingeprägt ist und daß das Rastohr (70) einen Rastsitz (80) aufweist, der eine der Sicke (68) angepaßte Form aufweist.

11. Außenspiegel nach Anspruch 10, dadurch gekennzeichnet, daß das Rastohr (70) eine dem Rastsitz zugeordnete Kulisse (76) aufweist, welche im Schwenkweg einer seitlichen Verbreiterung (64) am freien Ende der Rastfeder (60) ausgebildet ist.

12. Außenspiegel nach einem der Ansprüche 10 oder 11, dadurch gekennzeichnet, daß das Rastohr (71) zwei mit dem Spiegelfuß (2) verbundene, beabstandete Schenkel (72, 75) aufweist, die durch einen Rastsitz (86) verbunden sind, und jeweils eine Kulisse (76, 74) tragen, welche im Schwenkweg zweier einandergegenüber liegender, am Ende der Rastfeder (60) ausgebildeten Verbreiterungen (64) angeordnet sind und zwischen sich einen Zwischenraum lassen, der breiter ist als ein Hauptteil (62) der Rastfeder (60) und enger ist als die Breite der Rastfeder (60) an ihren endseitigen Verbreiterungen.

## Claims

1. An exterior mirror for a vehicle, with a base (2) securable on the body of the vehicle, and with a casing (4) retained in operational position on the mirror base (2) by the force of a spring, wherein an edge (19) of the mirror casing (4) close to the mirror base (2) rests on a shoulder (10) thereof, and the mirror casing (4) is pivotable backwards in relation to the mirror base (2) against the force of the spring about its rear edge section as viewed in the direction of travel, and wherein a locking member is secured on the mirror casing (4) or the mirror base (2), and, in an end position of pivoting, is detachably caught, by a movement of the mirror casing (4) beyond the end position of pivoting, in a catch formed on the mirror base (2) or the mirror casing (4), **characterised in that** the locking member is a longitudinally extended catch spring (40, 60) provided, transversely to its longitudinal direction, with a profile (44, 46, 48) corresponding to the catch (29, 30, 25, 80, 86), and a slotted guide (23, 26, 74, 76) deflecting the catch spring is provided, the path of the catch spring defined by the pivoting movement of the mirror casing (4) intersecting the slotted guide, or the path of the slotted guide defined by the pivoting movement of the mirror casing intersecting the catch spring, in such a manner that when the profile is caught in the catch, the catch spring (40, 60) is tensioned so as to release it.

2. An exterior mirror according to claim 1, **characterised in that** the catch spring (40, 60) is secured in a wall (36, 56) - close to the mirror base - of the mirror casing (4), and in the operational position extends in the direction of the mirror base (2), and the catch is formed on at least one catch lug (20, 22, 70, 71) projecting in the operational position from the mirror base (2) into the mirror casing (4).

3. An exterior mirror according to claim 2, **characterised in that** the slotted guide (23, 26, 74, 76) is formed on the catch lug (20, 22, 70, 71).

4. An exterior mirror according to one of claims 1 to 3, **characterised in that** the profile comprises a widened portion (44, 46) on at least one side of the catch spring (40), and the catch (29, 30) is formed on the slotted guide (23, 26) which rises into the pivoting path of the widened portion (44, 46).

5. An exterior mirror according to claim 4, **characterised in that** the catch is a catch shoulder (30, 25) for the widened portion, used to block a pivoting-back of the catch spring (40).

6. An exterior mirror according to one of claims 4 or 5, **characterised in that** the slotted guide (23, 26) has a notch (28) projecting from its lower surface (29) at its end remote from the mirror base (2).

7. An exterior mirror according to one of claims 4 to 6, **characterised in that** the upper surface (27, 31) of the slotted guide (23, 26) is smooth.

8. An exterior mirror according to one of claims 4 to 7, **characterised in that** the catch spring is angled at its free end (at 48).

9. An exterior mirror according to one of claims 4 to 8, **characterised in that** the catch spring (40) has two opposed widened portions (44, 46) at its free end, and two axially symmetrical catch lugs (20, 22) are provided, the slotted guides thereof (23, 26) having an interspace therebetween wider than a main part (42) of the catch spring (40), but narrower than the width of the catch spring (49) at its widened portions (44, 46).

10. An exterior mirror according to one of the preceding claims, **characterised in that** a transverse corrugation (68) is impressed into the catch spring (60) and the catch lug (70) has a catch seating (80) of a shape fitting the corrugation (68).

11. An exterior mirror according to claim 10, **characterised in that** the catch lug (70) has a slotted guide (76) associated with the catch seating and formed in the pivoting path of a lateral widened portion (64) and at the free end of the catch spring (60).

12. An exterior mirror according to one of the claims 10 or 11, **characterised in that** the catch lug (71) has two arms (72, 75) at a distance from one another and connected to the mirror base (2), interconnected by a catch seating (86) and each having a slotted guide (76, 74) arranged in the pivoting path of two mutually opposed widened portions (64) formed at the end of the catch spring (60), and having an interspace therebetween wider than a main part (62) of the catch spring (60) and narrower than the width of the catch spring (60) at its widened portions at the end thereof.

## Revendications

1. Rétroviseur extérieur pour un véhicule avec un support de rétroviseur (2) pouvant être fixé sur la carrosserie du véhicule, avec un corps de rétroviseur (4) maintenu en position d'utilisation sur le support de rétroviseur (2) par effet de ressort, un bord (19) du corps de rétroviseur (4) proche du support de rétroviseur reposant sur un épaulement (10) du support de rétroviseur (2) et le corps de rétroviseur (4) étant pivotant vers l'arrière autour de sa section de bord arrière dans le sens de déplacement contre l'effet de ressort par rapport au support de rétroviseur (2) et un organe de blocage étant fixé sur le corps de rétroviseur (4) ou sur le support de rétroviseur (2) et étant retenu amovible dans une position extrême de pivotement dans un piège formé sur le support de rétroviseur (2) ou le corps de rétroviseur (4) par un déplacement du corps de rétroviseur (4) allant au-delà de la position extrême de pivotement, caractérisé en ce que l'organe de blocage est un ressort d'arrêt (40, 60) de forme allongée muni transversalement à son sens longitudinal d'un profil (44, 46, 68) adapté au piège (29, 30, 25, 80, 86) et une coulisse (23, 26, 74, 76) guidant le ressort d'arrêt est prévue, la course du ressort d'arrêt définie par le mouvement de pivotement du corps de rétroviseur (4) croisant la coulisse ou la course de la coulisse définie par le mouvement de pivotement du corps de rétroviseur croisant le ressort d'arrêt, de telle sorte que le profil étant retenu dans le piège, le ressort d'arrêt (40, 60) est tendu dans le sens de son dégagement.

2. Rétroviseur extérieur selon la revendication 1, caractérisé en ce que le ressort d'arrêt (40, 60) est ancré dans une paroi (36, 56) du corps de rétroviseur (4) proche du support de rétroviseur et s'étend en position d'utilisation dans la direction du support de rétroviseur (2) ; et en ce que le piège est formé sur au moins une oreille d'arrêt (20, 22, 70, 71) dépassant du support de rétroviseur (2) en position d'utilisation dans le corps de rétroviseur (4).

3. Rétroviseur extérieur selon la revendication 2, caractérisé en ce que la coulisse (23, 26, 74, 76) est formée sur l'oreille d'arrêt (20, 22, 70, 71).

4. Rétroviseur extérieur selon l'une des revendications 1 à 3, caractérisé en ce que le profil est constitué d'un élargissement (44, 46) du ressort d'arrêt (40) au moins sur un côté et le piège (29, 30) est formé sur la coulisse (23, 26), laquelle s'élève dans la course de pivotement de l'élargissement (44, 46).

5. Rétroviseur extérieur selon la revendication 4, caractérisé en ce que le piège est un épaulement d'arrêt (30, 25) bloquant un pivotement de retour du ressort d'arrêt (40) pour l'élargissement.

6. Rétroviseur extérieur selon l'une des revendications 4 ou 5, caractérisé en ce que la coulisse (23, 26) présente sur son extrémité éloignée du support de rétroviseur (2) une came (28) saillant de son côté inférieur.

7. Rétroviseur extérieur selon l'une des revendications 4 à 6, caractérisé en ce que le côté supérieur (27, 31) de la coulisse (23, 26) est lisse.

8. Rétroviseur extérieur selon l'une des revendications 4 à 7, caractérisé en ce que le ressort d'arrêt est recourbé sur une extrémité libre (en 48).

9. Rétroviseur extérieur selon l'une des revendications 4 à 8, caractérisé en ce que le ressort d'arrêt (40) présente à son extrémité libre deux élargissements opposés (44, 46) et en ce que deux oreilles d'arrêt (20, 22) symétriques sont prévus, dont les coulisses (23, 26) laissent entre elles un espace intermédiaire qui est plus large qu'une partie principale (42) du ressort d'arrêt (40), mais plus étroit que la largeur du ressort d'arrêt (49) à ses élargissements (44, 46).

10. Rétroviseur extérieur selon l'une des revendications précédentes, caractérisé en ce qu'une moulure transversale (68) est imprimée dans le ressort d'arrêt (60) et en ce que l'oreille d'arrêt (70) présente un siège d'arrêt (80) qui présente une forme adaptée à la moulure (68).

11. Rétroviseur extérieur selon la revendication 10, caractérisé en ce que l'oreille d'arrêt (70) présente une coulisse (76) associée au siège d'arrêt, laquelle est formée dans la course de pivotement d'un élargissement latéral (64) à l'extrémité libre du ressort d'arrêt (60).

12. Rétroviseur extérieur selon l'une des revendications 10 ou 11, caractérisé en ce que l'oreille d'arrêt (71) présente deux branches écartées (72, 75) reliées au support de rétroviseur (2), qui sont reliées par un siège d'arrêt (86) et portent chacune une coulisse (76, 74), lesquelles sont disposées dans la course de pivotement de deux élargissements (64) opposés, formés à l'extrémité du ressort d'arrêt (60) et laissent entre elles un espace intermédiaire qui est plus large qu'une partie principale (62) du ressort d'arrêt (60), et plus étroit que la largeur du ressort d'arrêt (60) à ses élargissements d'extrémité.
